(19) Europäisches Patentamt
European Patent Office
Office européen des brevets

(11) **EP 4 485 198 B1**

(12) **EUROPEAN PATENT SPECIFICATION**

(45) Date of publication and mention
of the grant of the patent:
**01.04.2026   Bulletin 2026/14**

(21) Application number: **23306038.3**

(22) Date of filing: **28.06.2023**

(51) International Patent Classification (IPC):
*G06F 9/50* (2006.01)          *G06F 3/06* (2006.01)
*G06N 20/00* (2019.01)          *G06F 11/34* (2006.01)

(52) Cooperative Patent Classification (CPC):
**G06F 9/5011; G06F 3/0605; G06F 3/061;
G06F 3/0631; G06F 3/0653; G06F 3/067;
G06F 3/0685; G06F 11/3457; G06N 5/01;
G06N 20/00;** G06F 2209/501

(54) **METHOD AND SYSTEM FOR OPTIMIZING DATA PLACEMENT IN HIGH-PERFORMANCE
COMPUTERS**

VERFAHREN UND SYSTEM ZUR OPTIMIERUNG DER DATENPLATZIERUNG IN
HOCHLEISTUNGSRECHNERN

PROCEDE ET SYSTEME D'OPTIMISATION DE PLACEMENT DE DONNEES DANS DES
ORDINATEURS HAUTE PERFORMANCE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**01.01.2025   Bulletin 2025/01**

(73) Proprietor: **BULL SAS
78340 Les Clayes-Sous-Bois (FR)**

(72) Inventors:
• **MIMOUNI, SALIM
38100 Grenoble (FR)**
• **COUVEE, PHILIPPE
38190 Villard Bonnot (FR)**

(74) Representative: **Cabinet Camus Lebkiri
25 rue de Maubeuge
75009 Paris (FR)**

(56) References cited:
**US-A1- 2023 016 170**

**Description**

**TECHNICAL FIELD**

The technical field of the invention is the field of high-performance computing, also referred to as "HPC".
The present document concerns a method and system for optimizing data placement in a high-performance computer, and in particular for automatically selecting storage mediums to be used during the execution of an application by a high-performance computer.

**STATE OF THE ART**

In High-Performance Computing, optimizing data placement is a critical challenge in ensuring the efficiency and performance of applications.
Data placement in High Performance Computing refers to the strategic organization and positioning of data in different storage mediums to maximize efficiency and performance. This is a critical aspect of HPC because these systems often deal with processing massive amounts of data at high speeds. Optimal data placement requires careful consideration of the types of storage mediums comprised in an HPC.
There are various levels of storage mediums in an HPC system, including fast but small cache memory near the processors, called "Burst Buffer", larger and slower main memory such as Solid-State Drive "SSD", and even larger and even slower disk storage, such as Hard Disk Drive "HDD". These different levels of storage are also called "storage tiers". Burst Buffers (BBs) are used to mitigate the performance disparity between computing and storage systems. Burst Buffers are a very efficient but costly storage solution.
Data placement also involves considerations of parallelism and distribution. In an HPC system, data might be distributed across multiple nodes or disks, allowing for parallel processing. Data placement also comprises selecting data storage locations, for example situated across the system.
The way of placing data in such systems can significantly enhance or decrease the performances of the system. Generally, the data placement configuration is still performed by hand, or at least partially by hand, by an operator of the HPC. Most of the time, the Burst Buffer is selected as the primary storage medium to use, but the Burst Buffer has a limited bandpass, creating a bottleneck, providing suboptimal performances of the HPC. Therefore, recently, the pursuit of enhanced efficiency in HPC systems has led to an increased focus on optimizing data placement. The state of technical knowledge includes data placement optimization methods based on heuristic algorithms, partitioning approaches, and machine learning techniques.
In the existing state of the art, several approaches aimed at optimizing data management in specific areas such as climate modelling, genomics, and materials science were developed. In such cases, machine learning-based methods have been employed to predict data access patterns and to optimize the distribution of data among different storage units.
Data placement optimization development can be categorized as industrial-led development, or as academic-led development.
The industrial state of the art for data placement in HPC systems presents some limitations. The solutions proposed by actors like IBM® with IBM Spectrum Scale® and Cray® with Cray DataWarp® are specific to certain applications or environments, limiting their applicability in different contexts and making the implementation of a versatile, one-size-fits-all solution for data placement challenging.
The academic state of the art in data placement in HPC systems also has its limitations. While academic research often explores innovative ideas and theoretical approaches, they may lack maturity and validation in real-world environments. For example, [Jin, Tong, et al. "Exploring data staging across deep memory hierarchies for coupled data intensive simulation workflows." 2015 IEEE International Parallel and Distributed Processing Symposium] proposes methods for improving the scheduling of MPI (for "Message-Passing Interface") communications by considering inputs/outputs, but these methods have not yet been widely adopted or tested in industrial contexts.
Moreover, academic work often focuses on specific problems and may not always take into account the entire system or the interaction between its components. Therefore, academic approaches can be challenging to integrate into existing industrial solutions. For instance, [Iannone, F., et al. "CRESCO ENEA HPC clusters: A working example of a multifabric GPFS Spectrum Scale layout." 2019 International Conference on High Performance Computing & Simulation (HPCS). IEEE, 2019] focuses on data-aware cluster scheduling but does not necessarily address other aspects such as resource management or workload distribution.
When comparing the industrial and academic state of the art, it can be observed that industrial approaches focus more on practical implementation and integration of solutions into existing systems. Industrial solutions are often designed to meet specific needs and are directly applicable in production environments.
On the other hand, academic approaches, like the ones previously described, are generally more theoretical and aimed at finding new methods and algorithms for optimizing data placement. Such work is often more fundamental and may not be directly applicable in production environments without additional adaptations.

Nevertheless, both the academic and industrial state of the art share similar goals, i.e., to improve the efficiency and performance of HPC systems by optimizing data placement. Both fields leverage the knowledge and advances of the other to progress research and development in this area.

Patent publication US 2023/016170 A1 discloses a method for providing application-specific storage for storage consuming application, involves selecting storage resources within cloud-based storage systems to provide storage services to application based on comparison.

To address the previously mentioned challenges, there is a need for a versatile and efficient solution to optimize data placement.

## SUMMARY OF THE INVENTION

The present invention solves the above-mentioned problems by providing a solution which optimizes data placement by simulating application execution.

According to a first aspect of the invention, this is satisfied by providing a method implemented by computer for selecting a storage configuration based on a plurality of storage mediums, the plurality of storage mediums being comprised in a high-performance computer, the storage configuration defining at least one storage medium of the plurality of storage medium to use during the execution of at least one application to be executed by the high-performance computer, the method comprising:

- obtaining configuration data of the high-performance computer, the configuration data comprising a list of the plurality of storage mediums and input/output data of the application to be executed by the high-performance computer,

- decomposing the obtained input/output data into storage phases and computational phases,

- obtaining expected storage performances, the obtaining comprising providing the input/output storage phases to a trained performance regression model, the expected storage performances comprising, for each storage phase, storage performance of each storage medium of the plurality of storage mediums storing said input/output storage phase,

- simulating the execution of the first application for each storage configuration of a plurality of storage configurations based on the plurality of storage mediums, the simulation providing a performance score of each storage configuration of the plurality of storage configurations,

- selecting, from the plurality of storage configurations, the storage configuration having a highest performance score and using the selected storage configuration as the storage configuration for the execution of the application by the high-performance computer.

Thanks to the invention, an automatically optimized data placement is obtained. The invention decomposes the captured input/output signal into compute phases and storage phases, to provide a representation that separates what is specific to the application code from what is due to storage performance. The performance model permits to obtain separate performance data for each storage medium for each storage phase. The regression model can predict the bandwidth or throughput of different storage tiers using a performance model and permits the selection of the optimal storage tier. The simulation permits to compare different storage configurations for the execution of the whole application, to select the optimal storage configuration. It is understood by "storage configuration" a list of storage mediums to use for the execution of an application, the list being linked to the storage phases extracted from the input/output data. In other words, a storage configuration tells where to store each storage phase.

The method according to the invention may also have one or more of the following characteristics, considered individually or according to any technically possible combinations thereof:

- the obtained input/output data into storage phases and computational phases comprises:

  - classifying each data point of the obtained input/output data in a class corresponding to a computing phase of the application or in a class corresponding to a storage phase of the application, the classification being performed using a clustering model.

- the clustering model is a k-means clustering model and the classification comprises:

- obtaining a predetermined threshold,

- initializing a counter,

- with N the number of data points of the input/output data, while the counter has not reached N or a weight is inferior to the predetermined threshold:

  - incrementing the counter,

  - clustering the input/output data using the k-means clustering model with the counter as the number of clusters as an entry parameter of the k-means clustering model, to obtain a plurality of clusters,

  - finding the lowest cluster from the plurality of clusters,

  - computing the weight, the weight being the number of data points belonging to the lowest cluster found divided by the sum of all values of all the data points of the input/output data,

  - creating, for each data point of the input/output data, a label representing the class corresponding to a computing phase of the application or the class corresponding to a storage phase of the application, as a function of the clustering of the data point of the input/output data in a cluster of the plurality of clusters.

- the input/output data comprise at least a first timeseries and a second timeseries captured during a same first-time interval when the high-performance computer executes the application,

  - the first timeseries comprising an amount of data written, by the executed application, within the high-performance computer and

  - the second timeseries comprising an amount of data read, by the executed application, within the high-performance computer,

  - and decomposing the obtained input/output data into storage phases and computational phases first comprises combining the first timeseries with the second timeseries into a combined timeseries comprising the amount of data written and read, by the executed application, within the high-performance computer during the time interval.

- the predetermined threshold is expressed in a percentage of acceptable data loss of the obtained input/output data or in quantity of acceptable data loss of the obtained input/output data.

- the trained performance regression model is a random forest regressor model, a gradient boosting regressor model or a decision tree regressor model.

- the trained performance model has been previously trained using input/output data captured during the execution of a plurality of applications by the high-performance computer.

- simulating the execution of the first application comprises simulating, for each storage configuration, storing an amount of data corresponding to an amount of data of each storage phase resulting from the decomposing of the input/output data.

- the plurality of storage configurations is provided by an optimization module to a simulating module performing the simulating.

- the optimization module is a black-box optimization engine.

Another aspect of the invention relates to a system configured to implement the method according to any one of the preceding claims and comprising:

- at least one memory storing the configuration data,

- a decomposer module configured to perform the decomposing,

- a performance module configured to obtain expected storage performance,

- a simulating module configured to perform the simulating.

Another aspect of the invention relates to a computer program product comprising instructions which, when the program is executed by a computer, cause the computer to carry out the method according to the invention.

Another aspect of the invention relates to a computer-readable medium having stored thereon the computer program product of the invention.

The invention finds a particular interest in high-performance computers comprising several storage tiers and executing complex applications storing massive amounts of data.

## BRIEF DESCRIPTION OF THE FIGURES

Other characteristics and advantages of the invention will become clear from the description that is given thereof below, by way of indication and in no way limiting, with reference to the appended figures, among which:

- Figure 1 is a schematic representation of a system configured to implement a method according to the invention,

- Figure 2 is a schematic representation of a plurality of storage tiers of a high-performance computer,

- Figure 3 is a schematic representation of a method according to the invention,

- Figure 4 is a schematic representation of storage and compute phases after decomposition using the method according to the invention,

- Figure 5 is a schematic representation of a step of a method according to the invention,

- Figure 6 is a schematic representation of sub-steps of a step of a method according to the invention,

- Figure 7 is a schematic representation of a storage phase after decomposition using the method according to the invention,

- Figure 8 is a schematic representation of storage and compute phases after decomposition using the method according to the invention,

- Figure 9 is a schematic representation of a performance module according to the invention,

- Figure 10 is a schematic representation of the accuracy of a decision-tree regression model as the performance module according to the invention,

- Figure 11 is a schematic representation of a table comprising performance data generated by the performance module according to the invention,

- Figure 12 is a schematic representation of the results of the simulation of different storage configurations using the method according to the invention.

## DETAILED DESCRIPTION

For greater clarity, identical or similar elements are marked by identical reference signs in all of the figures.

The invention is a recommendation system for optimizing data placement. The recommendation system permits the automatic selection of an optimized storage configuration, depending on the application and on the available storage mediums. To do so, an important part of the invention comprises decomposing the application input/output data into storage phases and compute phases. With this decomposition, storage phases can be analyzed and allocated to adapted storage mediums of the high-performance computer.

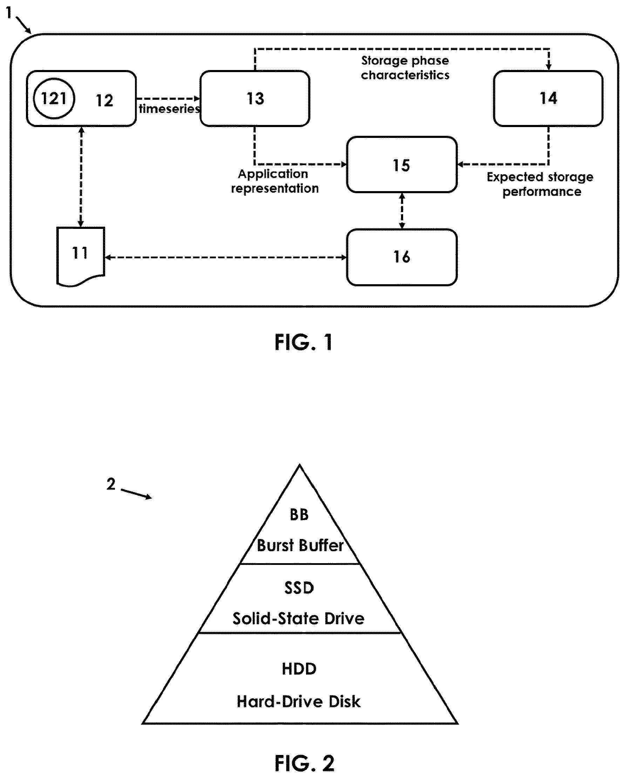

Figure 1 is a schematic representation of an embodiment of a system according to the invention.

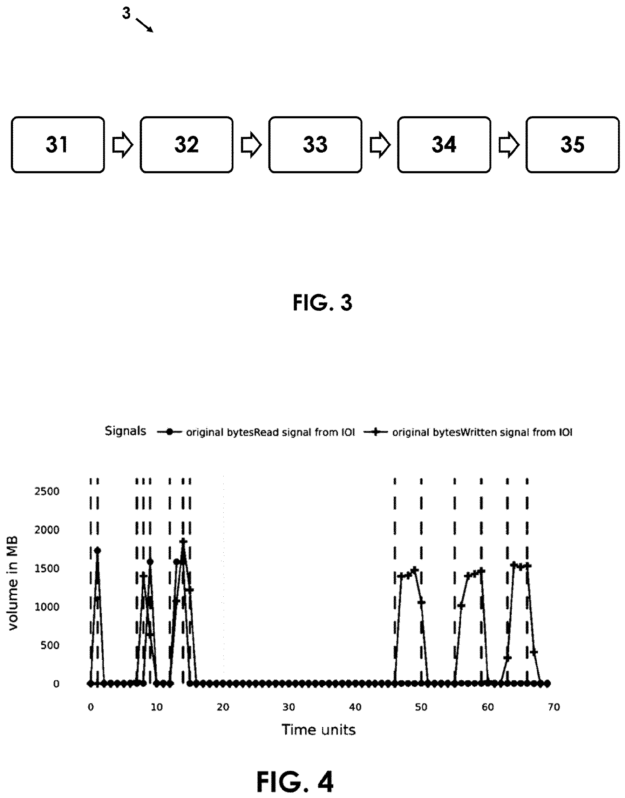

The system 1 represented in Figure 1 is configured to implement a method for selecting a storage configuration according to the invention, said method being represented in Figure 3. The system 1 comprises modules 12 to 16 and a file 11. The modules 12 to 16 are preferably software modules, implemented by a computer. A "computer" is understood as comprising at least one processor coupled to at least one memory, the memory storing instructions which, when executed by the processor, lead the computer to implement steps of a method or software modules defined by the instructions. When an action is said to be performed by the computer, it is understood that the memory of the computer stores instructions which, when executed by the processor of the computer, cause the processor of the computer to perform said action. When an action is said to be performed by a software module implemented by a computer, it is understood that the memory of the computer stores instructions which, when executed by the processor of the computer, cause the processor of the computer to perform the actions assigned to the software module. The file 11 can be stored in the memory of the computer implementing the method according to the invention or in a storage medium comprised in the computer or outside the computer.

The system 1 is comprised in or coupled to a high-performance computer. That is, the computer implementing the method 3 represented in Figure 3 is a standalone computer coupled to the high-performance computer for example via a network or is the high-performance computer itself.

A high-performance computer comprises at least one cabinet, preferably several cabinets, each cabinet comprising at least storage and/or compute blades, each blade comprising nodes. A storage blade comprises several storage nodes, for example different types of storage mediums. A compute blade comprises several compute nodes, for example processors, such as graphic processing units (GPU) and/or central processing units (CPU). Some or all of the blades can comprise both compute and storage nodes. The blades are linked by high-throughput networks cables, and the cabinets are also linked by said cables, resulting in a high-performance computer able to handle complex applications, generally to perform complex computing such as weather or research modeling.

The system 1 stores a workflow description file 11. The workflow description file 11 is a configuration file comprising configuration data of the high-performance computer. The workflow description file 11 defines the application or applications to be executed by the high-performance computer. An application is a set of instructions to be executed by the high-performance computer. Such instructions can comprise calculations, display of results, storage of data, retrieval of data from storage, or any other instructions.

The workflow description file 11 also defines the storage mediums of the high-performance computer. For example, as represented in Figure 2, the high-performance computer can comprise three tiers of storage: Tier 1 storage Burst Buffers BB, Tier 2 storage Solide-State Drives SSD, and Tier 3 storage Hard-Drive Disks HDD. The invention is not limited to said storage mediums and said storage tiers and can apply to any high-performance computer comprising different storage tiers. The workflow description file 11 is automatically read by the high-performance computer and can comprise the storage configuration to use for the execution of each application listed. The storage configuration obtained by the invention can thus be added to the workflow description file 11 for its use by the high-performance computer.

The high-performance computer can be used by an operator. To use a high-performance computer, that is to give the high-performance computer instructions and to read results, the operator can use a human-machine interface such as a screen, for example the screen of a smartphone, computer, tablet, or any other device comprising a screen and capable of being controlled by a user using a human-machine interface. The human-machine interface can optionally comprise a keyboard and/or a mouse.

The method 3 for selecting a storage configuration is represented in Figure 3. The method 3 comprises five steps 31 to 35.

In a first step 31, configuration data of the high-performance computer is obtained by the computer implementing the method 3. As explained previously, the computer implementing the method 3 is a standalone computer (a processor and a memory) or the high-performance computer itself. The obtained configuration data comprise at least a list of storage mediums of the high-performance computer and input/output data of an application to be executed by the high-performance computer and for which an optimized storage configuration is to be obtained.

The list of storage mediums of the configuration data can be retrieved in the workflow description file 11 if it is comprised in said file 11 or in any other configuration document of the high-performance computer accessible by the computer implementing the method 3. The list of storage mediums can comprise all storage mediums, or only the storage mediums available for the period of time during which the application is to be executed.

The input/output data retrieved at step 31 is input/output data of the application captured during a previous execution of the application. That is, the application to be executed with an optimized storage configuration must have been executed by the high-performance computer at least once before the optimization. The input/output data have been captured using input/output instrumentation 12, already existing on all high-performance computers. Such instrumentation 12 includes but is not limited to software components 121 configured to register bandwidth, latency, amount of data read from storage, amount of data written into storage. This capture can be performed for example every 5 seconds. This captured raw data includes both intrinsic events linked to the application's input/output operations and latencies associated with storage performance. The captured input/output data can be stored in a database, for later access during the step 31 by the computer implementing the method 3. The database can be comprised in the high-performance computer or accessed via a network.

A core point of the invention is to analyze this raw input/output data to obtain storage phases and compute phases. Every application executed by a high-performance computer comprises compute phases and storage phases. A storage phase is a time window during which mostly storage of data is performed, the storage comprising reading data from one or several storage mediums and/or writing data from one or several storage mediums. A compute phase is a time window during which mostly calculation is performed, as opposed to performing mostly storage. The input/output data obtained is preferably in the form of dataflow timeseries, which include read and written volumes. Storage phases, which are characterized by consecutive read and/or write requests, appear in the timeseries as points with relatively high ordinates. Conversely, calculation phases generally appear as flat or near-zero data flow segments. Two timeseries, one timeseries of written data and one timeseries of read data, are represented in Figure 4. The compute phases are all the near-zero ordinate time windows. The storage phases are consecutive read and/or write time windows. It is to be noted that, during compute phases, data is read or written into storage mediums. But the amount of data read or written is low compared to storage phases.

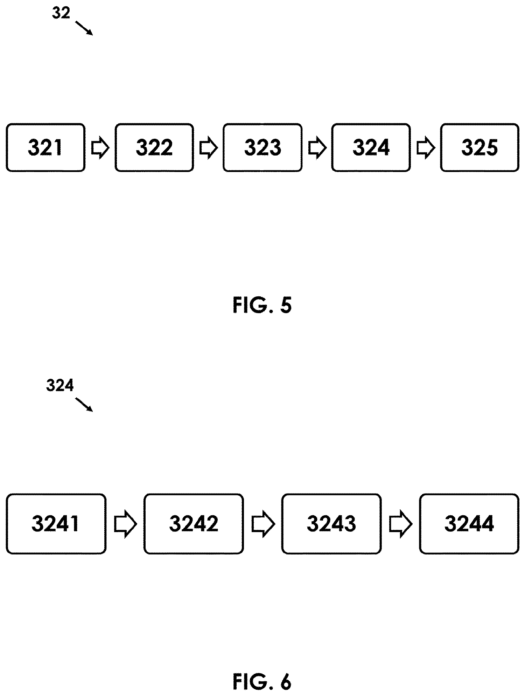

The method 3 comprises a step 32 of decomposing the obtained input/output data into storage phases and computational phases. The decomposition in storage phases and compute phases is performed by the decomposing module 13 and is possible because, in a high-performance computer, the computing stops when the storage is performed and vice versa. The decomposition comprises finding the mean bandwidth, not of the application but of the storage medium on which is read and/or written data. This decomposition comprises five sub-steps and is represented in Figure 5.

The obtained input/output data is in the format of timeseries. The obtained input/output data is in two timeseries: a timeseries of read data and a timeseries of written data. Each timeseries represents the amount of data respectively read or written by the executed application. The amount of data is for example expressed in megabytes. Both timeseries have been captured during a same time interval. In a first sub-step 321, both timeseries are combined in a single timeseries. The single timeseries is called "envelope signal". This combination comprises computing the Euclidian norm of two signals representing the two timeseries. With s1 the first signal and s2 the second signal, the envelope signal S can be computed as follows:

$$S = \|s1 + i * s2\|$$

Each phase is a time interval [*ai, bi*] during which the envelope signal either has a sufficiently low-level input/output activity for the phase to be qualified as a compute phase *ci* or has an activity significant enough to be qualified as a storage phase *di*.

Even compute phases contain noisy levels of input/output data. Therefore, the classification problem comprises defining a maximum threshold level v0 for which the sum of all compute phases (classified to 0) is always below this threshold level v0. For example, the threshold can be defined by configuration as being comprised in a configuration file, and/or can be defined by a user using a human-machine interface. The threshold is expressed in percentage, for example 1%, or can be expressed in amount of data, for example in megabytes, for example 10 megabytes, wherein the threshold represents the maximal acceptable error as will be explained later.

The mathematical problem of a clustering algorithm involves classifying a temporal signal *s(t)* into two segments, *C* and *D. C* consists of signal points with values that are less than or equal to a threshold, and *D* consists of the complement of *C*. The continuous segments of *C* are represented by intervals [*ak, bk*].

*s(ti)*, the temporal signal is partitioned in two sets, the set *C* comprising the computing and the set *D* comprising the storing, so that:

$$C = t_i \in \mathbb{R} \mid \sum_{t_i \in C} s(t_i) \le v_0$$

And

$$D = t_j \in \mathbb{R} \mid \sum_{t_j \in D} s(t_j) > v_0$$

Phases [*ak, bk*] can be defined, as the transition points from *D* to *C* and from *C* to *D,* these phases constituting distinct part of the signal:

$$s = C \cup D$$

$$C \cap D = \emptyset$$

This represents the mathematical problem of a clustering algorithm that classifies a temporal signal $s(t)$ into phases with two labels, $C$ and $D$, such that $C$ contains signal points with sum of values that are less than or equal to the threshold level v0 and $D$ contains the complement of $C$. The intervals [ak, bk] represent the continuous phases of $C$.

Each continuous phase of $C$ is represented by the interval [ak,bk]. In an optimal context, the I/O instrumentation would generate a noise-free signal, leading to points in the set $C$ having zero ordinate, with the remainder belonging to the set $D$. However, in practice, the signal is often affected by noise. Therefore, the value of the threshold v0 determines the noise level beyond which the points are reassigned from the calculation set $C$ to the data *set D.*

The decomposition algorithm according to the invention is an adaptive method that classifies data points based on their values. It adjusts the threshold in a meaningful manner to account for variations in the input/output data volume and error. This enables the algorithm to effectively categorize each data point into a relevant class. By continuously adapting to the range of values in the data, the algorithm can provide accurate and reliable classifications. The algorithm dissects the temporal signal $s(t)$ into sets, labelled as either $C$ or $D$. The points belonging to $C$ comprise the signal points whose sum is less than or equal to a certain threshold, while $D$ contains the rest of the points. It is to be noted that the threshold v0 does not represent an ordinate value of the signal, but the total volume error.

The decomposition algorithm according to the invention comprises a signal decomposition technique based on k-means clustering. The class is initialized with three parameters: a signal to decompose, a relative threshold v0 for the weighted mean of the ordinates of the lowest-level cluster, and a Boolean variable determining whether all labels greater than 0 should be merged into a single label. The envelope signal is first transformed at a step 322 into a one-dimensional array data structure of size (n, 1).

The algorithm then determines the ideal number of clusters when the mean values of cluster0 (the initial cluster) are below the threshold v0 compared with the global means. As the two timeseries have been combined during the sub-step 321, his process is performed in one dimension, the dimension corresponding to the signal flow. At a step 323, the algorithm starts with a single cluster and continues, during a step 324, to increase the number of clusters until the average of the lowest level cluster is less than the threshold v0 or until the number of clusters exceeds the number of signal points n. As a result, the optimal number of clusters and the corresponding instance of KMeans are obtained.

Subsequently, the algorithm returns the labels at a step 325 and breakpoints at a step 326 derived from the clustering procedure. If the Boolean variable "merge" is true, all labels greater than 0 are merged into a single label. The breakpoints are the indices that distinguish two distinct phases, each phase being assigned a unique label to define its nature in subsequent analyses.

This method uses two distinct sub-processes to decompose the signal. It begins by determining the optimal clustering, and then uses this clustering to identify the points of discontinuity and assign the corresponding labels. The end result is a set of discontinuity points and labels.

To sum up, the decomposition algorithm can read as follows, with S the signal to be decomposed, v0 the relative threshold for the mean value of the ordinate weight of the lowest-level cluster, and M a Boolean flag for merging all positive labels:

- At a step 322, the signal S is converted to a one-dimensional array, denoted as A.

- At a step 323, a counter n_clusters is initialized to 1 and the ordinate weight of the lowest-level cluster is initialized to 1.

- At a step 324, while the weight is inferior or equal to the threshold v0 or while the counter n_clusters has not reached the number of data points of the signal S :

    - Increment the counter n_clusters by 1 in a first sub-step 3241.

    - Perform a k-means clustering on the array A with the counter n_clusters as the number ofc lusters to obtain, and obtain a k-means object, denoted as kmeans in a second sub-step 3242.

    - In the obtained object kmeans, find the cluster with the smallest mean value, denoted as label0 in a third sub-step 3243.

    - calculate the proportion of the values of the array A belonging to the smallest cluster label0 relative to the sum of all the values of the array A, and update the weight v0_weight with this value in a fourth sub-step 3244.

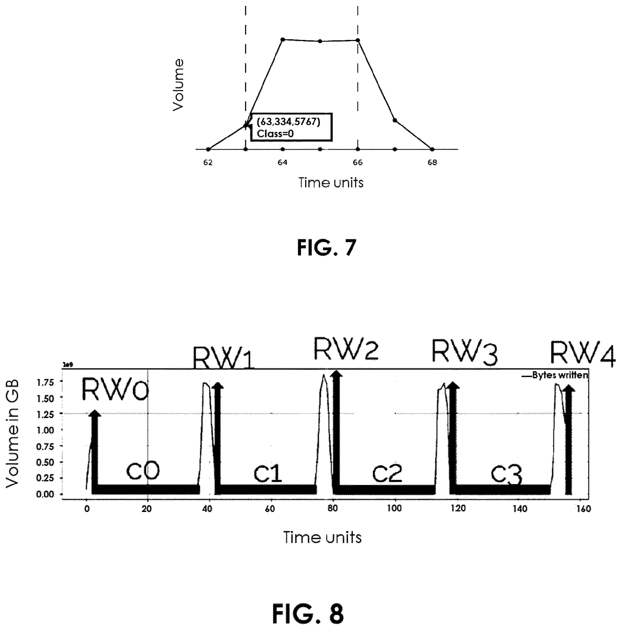

When the while loop ends, that is when the loop has been performed a number of times equal to the number of data points of the input/output signal or when the weight is above the threshold v0, in a step 325, the kmeans object obtained in the sub-step 3242 is used to create a list of labels, denoted as L. If the Boolean M is true, all positive labels in L are merged into a single label. If the Boolean M is false, each point of the signal constitutes a phase with its own characteristics. This value is not very realistic, because applications perform "checkpoints" during which several consecutive points in the signal have volume values classified as "high". Setting the Boolean M to true allows these to be grouped together under the term of a single I/O phase, as shown in Figure 7.

In a step 326, breakpoints are determined as the indices in L where the label changes. The breakpoints are then stored in an array B.

The decomposition algorithm returns B and L as results. B is a list of indices separating the different phases of the signal, and L is a list of labels corresponding to each phase of the signal. The labels are either a label corresponding to a class representing a storage phase or a label corresponding to a class representing a compute phase.

Based on the threshold input by the user, each point in the signal is assigned to a specific class. As represented in Figure 7, which shows an outcome of the algorithm for one specific phase of the signal, the accepted error or threshold v0 is set high enough in this example to classify the point 63 as part of the computing phase and not part as part of the checkpoint, despite being close to the threshold. This demonstrates the adaptability of the algorithm in adjusting the threshold to accurately categorize each point in the signal.

As shown in Figure 4, the vertical dashed lines in the representation of the signal indicate the outcome of the algorithm's division of the signal into compute and storage phases. Key data such as start timestamps, duration, type of operation (read, write or both), block size distribution and pattern (sequential, random or interleaved) of each storage phase is recorded, for example in a database for further use. The remaining signal, classified as compute phases, has the start timestamps, duration and relationships with previous events (storage or computation) stored separately, but for example in the same database.

The aforementioned decomposition algorithm 13 provides phase segmentation [$ak,bk$], categorizing data points of the envelope signal according to their value while adapting the threshold (or tolerated error) accordingly to account for fluctuations in input and output data volume and error. This flexibility ensures accurate and robust classification of data points, even when the signal is disturbed by noise.

Applying the decomposer 13 produces a set of intervals, each interval being a phase. The characteristics of the signal, previously stored in a database dedicated to input/output instrumentation, can be grouped according to these intervals to coincide precisely with the respective phases of the application.

This approach makes it easy to interrogate the database on these specific intervals in order to extract a complete set of characteristics to be retained for each storage phase. These features include elements essential to the performance model 14, such as patterns, histograms of input/output sizes and operations performed.

The representation of the application reduces the temporal support of the data segments to zero and maintains the computation segments as flat signals, $\varepsilon(t)|[ai,bi]$. The latency of each storage phase, noted $Li$, is exclusively due to the performance layer. The volume of data carried by each storage phase, a characteristic specific to the application and its timeline, is preserved using the Dirac distribution $\delta$. Thus, a storage phase is represented as $(R_i + W_i) \times \delta(t - t_i)$, where $Ri$ and $Wi$ are the volumes read and written in bytes, respectively. The formal expression of the application representation $r(t)$ is given as follows:

$$r(t) = \sum_{\varepsilon_i \in C} (t - \tau_i) \,|[ai, bi] + \sum_{j \in D} (Rj + Wj) \times \delta(t - tj)$$

Where $\tau i = \Sigma_{k \in D, k<i} L_i$ is the cumulative sum of signal latencies before the $i$th computation phase.

The obtained representation includes a vector of event time-axes indicating the presence of storage phases, as shown in Figure 8. The signal decomposition methodology of the invention can condense the storage phases of a signal, by representing them by Dirac distributions: the time base is reduced to 0 and the read and write volumes RW0, RW1, etc. are preserved in abscise. The compute phases (C0, C1, etc.) are preserved in the final representation as shown in the lower part of figure 8, but with a null value.

The rest of the decomposition algorithm 13 is dedicated to identifying and separating the compute and storage phases, as well as determining the predominant pattern in each phase. It then calculates a representation of the application and builds a dictionary of the characteristics of each phase. The following steps resume the whole decomposition algorithm leading to the vector representation:

-   Initialization of the class: The input/output data associated with the application to be executed is retrieved. The purpose of this class is to distinguish between the read and write time series in order to extract the compute, read and write phases separately.
-   Obtaining application time series: This method extracts the read and write time series for the application.
-   Determining the number of application nodes: This method retrieves information about the number of nodes for a specific application identifier.

- Phase extraction: This method determines the phases of each application time series using the envelope signal.
- Dominant pattern identification: From a dictionary of pattern names and their respective frequencies, this method returns the name of the predominant pattern. In the event of a tie, the first pattern in the dictionary is returned by the max routine.
- Application representation calculation: This method determines the application representation.
- Phase characteristics extraction: Based on the application representation, this method builds a dictionary of phase characteristics to feed a performance model. Phases with zero volume (an artefact of the decomposition) are excluded.

The representation is structured to capture the application's sequence of events and separate the part governed by the source code of the application (the compute phases) from the part controlled by storage and input/output performance (the storage phases). The former is referred to as the "application representation" (see Table 1) and the latter as the "storage phase characteristics" (see Table 2).

Table 1: application representation

| application representation | Value |
|---|---|
| Number of nodes | 1 |
| Storage phase timestamp | [0, 1, 8, 12, 44, 50, 54, 56] |
| Volume in reading of storage phases | [0B, 1.73 GB, 1.59 GB, 3.17 GB, 3.02 MB, 7.05 MB, 2.52 MB, 0B] |
| Volume in writing of storage phases | [0B, 0B, 2.04 GB, 4.14 GB, 5.33 GB, 5.31 GB, 5.33 GB, 0B] |

Table 2: storage phase characteristics

| I/O phase timestamp | Read access pattern | Write access pattern | Read operations | Write operations | Read bandwidth (MB/s) | Write bandwidth (MB/s) |
|---|---|---|---|---|---|---|
| 0 | Uncl | Uncl | 0 | 0 | 0 | 0 |
| 1 | Seq | Uncl | 812 | 0 | 1730 | 0 |
| 8 | Seq | Seq | 1305 | 986 | 790 | 1020 |
| 12 | Seq | Seq | 909 | 2000 | 1580 | 1380 |
| 44 | Seq | Seq | 601 | 1000 | 3.02* | 1330 |
| 50 | Seq | Seq | 1400 | 995 | 3.53* | 1330 |
| 54 | Seq | Seq | 500 | 1000 | 2.52* | 1070 |
| 56 | Uncl | Uncl | 0 | 0 | 0 | 0 |

It is to be noted that bandwidth value is not always significant when the volume of the phase is low, typically less than 10MB. This is shown in Table 2 where some of the values comprise a star *.

Once the storage phase characteristics have been obtained for each storage phase resulting from the decomposition, the storage phase characteristics resulting from the decomposition are provided to a performance model 14 and the application representation is provided to a simulation module 15.

The storage phase characteristics are preferably represented provided as a plurality of vectors or as a matrix, with one line for each storage phase, for example comprising: storage phase times, read pattern, write pattern, read operations, write operations, read bandwidth (for example in MB/s) and write bandwidth (for example in MB/s).

The application representation is preferably represented using a vector or a matrix, for example comprising: node count, events timestamp, read volumes and write volumes.

After decomposing the received input/output data, a following step 33 of obtaining expected storage performances is performed. To do so, a performance model 14 is used.

The performance model 14 is a tool for predicting the behavior of storage mediums when faced with specific input/output workloads. Based on previous or similar observations, this model evaluates expected storage performance, that is for example I/O latency and/or bandwidth, for the received storage phase characteristics. The performance model 14 is a machine learning algorithm which has been trained with training data to provide expected storage performance of the storage phase received from the decomposer module 13 when fed storage phase characteristics. The training data is storage phases and their characteristics, preferably in the same format as the received storage phase characteristics.

The performance model 14 is fitted on historical data from different HPC applications and storage mediums, taking into account factors such as data transfer size, I/O access pattern, and read and write operation volumes. This performance model 14 can predict the performance of different storage mediums in a given HPC system as a function of the phase characteristics in entry, allowing the simulation engine to assess the impact of various data placement strategies on overall application performance.

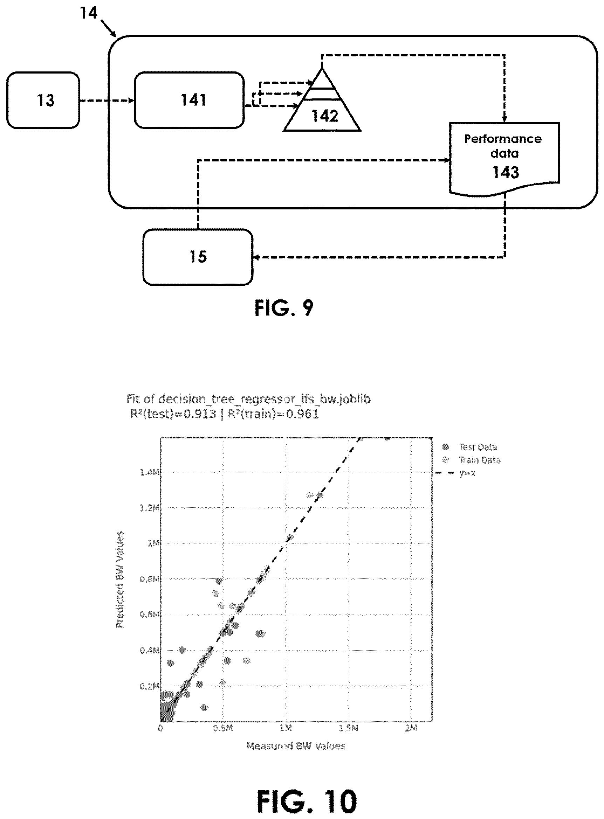

The performance model 14 plays an important role in predicting the behavior of storage tiers under specific I/O workloads. The performance model 14 is depicted in Figure 9. It aims to estimate the I/O latency (or bandwidth) based on past observations or based on observations similar to the received storage phase characteristics. To gather information about each storage phase extracted by the Application Decomposer 13, a similar I/O workload with similar phase characteristics, including block size, patterns, and read-write volume combination has previously been simulated. This task has previously been carried out by the I/O Workload Generator 141, which issues I/O requests to a specific storage tier 142 and records the resulting latency in a Performance Data table, stored in a database of the high performance computer or in a database of the computer implementing the method 3.

The Performance Data table can be regularly, or preferably constantly, updated by a background task that generates a dataset for incoming storage phases on all available storage mediums. Once the application is instrumented, that is once input/output data has been obtained for said application, the Performance Model 14 starts recording data and the Performance Data table is updated regularly. This can be performed before the method 3, for example during a first execution of the application.

When the simulator 14 later requests I/O latency information for a specific storage medium, the Performance Model 14 has already recorded the necessary data, and said data is ready for inference. If there are a small number of performance data of storage phases obtained, the Performance Data table can be represented as a simple table, with each phase being identified separately. The table will then provide the latency or bandwidth result for each phase. However, when the data is too massive, it is more computationally efficient to store the data in a regression model trained from the Performance Data table, which can then provide the results on request.

In such a case, the performance model 14 is preferably a decision tree regression model. Storage characteristics taken in entry of the model comprise the number of nodes operating I/O, the volumes of read and write operations, the predominant access patterns and the average block sizes for both operations. As shown in Figure 10, decision tree regression models are particularly adapted to the task of being the performance model 14. Figure 10 shows the accuracy of the performance model for an "LFS" (for "Large File Storage") storage tier. For each value measured on the x-axis, the value predicted by the model 14 is associated on the y-axis. The straight line with equation y=x measures the deviation from a perfect model. The test data is taken from a test data set and the train data are the points used to train and adjust the model. The obtained coefficient of determination $R^2$ shows that decision tree regression models can be used in large-scale HPCs, as the value is 0.913 for the test data set.

When the performance model 14 is a regression model it measures in advance, in off-line mode, the reaction of existing storage mediums to a range of regularly distributed characteristics. As soon as an initial application has been instrumented, the model becomes immediately usable. Once a storage configuration has been produced, it is refined to take into account the storage phases identified in the previous application.

The performance model 14 predicts the bandwidth, latency or throughput of the various storage tiers or mediums 142 for each storage phase, eliminating the need to generate the corresponding I/O loads for the application in question when decomposing it.

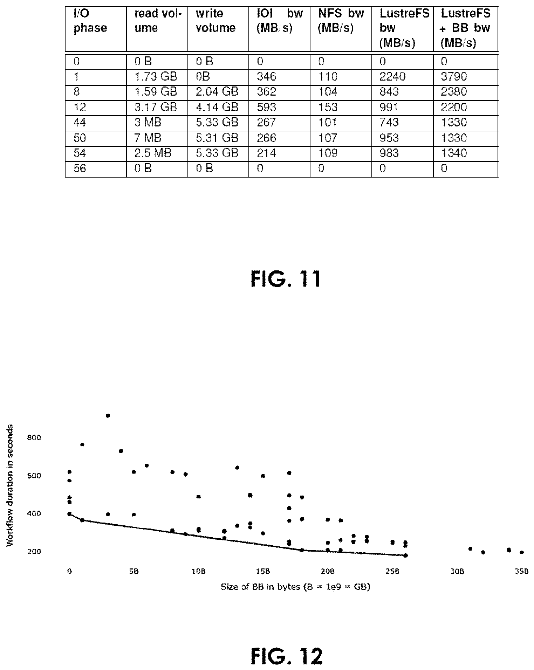

Example of performance data generated by the performance model 14 is presented in the table of Figure 11. This table displays the maximum recorded bandwidth for both read and write operations, taking into account the I/O features such as pattern and block size distributions. The terms "read bw" and "write bw" indicate the maximum bandwidth recorded for each operation, considering the impact of the I/O features on the performance. This table provides an overview of the storage performance of various storage technologies in terms of bandwidth during different storage phases. The results indicate that the Lustre filesystem combined with a Burst Buffer (BB) exhibited the highest bandwidth in the majority of phases, with the Lustre filesystem without the Burst Buffer coming in second.

The pattern and block size distributions can be simplified to make the results easier to interpret. To determine the average block size for read and write operations, the volume of data is divided by the number of observed operations. This provides a general understanding of the size of the data blocks being processed in each operation.

If the available data table is too small for a regression model a regular variation grid can be defined for each feature in entry of the regression model. By combining all the obtained grids, a synthetic table of characteristics is obtained. For each line, corresponding to a complete set of characteristics, the I/O load generation tool 141 can be used on each storage medium to obtain an estimate of latency or bandwidth.

When a sufficient number of storage performances of storage phases have been generated, i.e. when enough storage performance data is available to approximate the behavior of the application, the execution simulator 15 can be used at a step 34 of simulating the execution of the first application for each storage configuration of a plurality of storage configurations based on the plurality of storage mediums, the simulation providing a performance score of each storage configuration of the plurality of storage configurations.

At the step 34, the execution simulator 15 receives the application representation from the decomposer 13 and storage performances from the performance model 14 and reproduces, for a plurality of storage configurations, the mean bandwidth of the application and approximates the volumes of the different storage phases of the application, to obtain a performance score of each storage configuration received.

To do so, the simulator 15 can be constructed as a Discrete Event Simulator (DES) using the Python framework SimPy®. Its aim is to recreate a realistic simulation of the timeline of one or multiple applications that are running in parallel within a High-Performance Computing (HPC) environment and sharing limited resources. These resources include storage tiers with varying capacities and bandwidth limitations, as well as scarce resources such as burst buffers which can temporarily relieve I/O workloads but must be utilized efficiently.

The simulator 15 has access to the list of storage mediums of the high-performance computer, for example directly from the workflow description file 11, or from an optimization module 16. The simulator can simulate the storage performances of the storage mediums of the HPC during the execution of several applications running in parallel, or the storage performances of the storage mediums of the HPC during the execution of one application.

In the following SimPy code of the simulator 15, the simulated applications use the same "env" and "data" objects, and their events, read volumes, and write volumes can be directly entered into the application formalism. The events, read and write volumes are obtained from the application representation.

```
# preparing execution environment variables

env = simpy.Environment ()

data = simpy.Store(env)

# appl : read 3GB -> compute 15 seconds duration for 1 -> write 7GB

appl = Application ( env, name="appl", # name of the app in the display

compute=[0, 15], # two I/O events, first at 0 and after 15 unit time of compute activity.

read=[3e9, 0], # read 3GB of data at 0, before compute phase

write=[0, 5e9], # write 5GB at the second event

data=data) # collecting data for monitoring
```

The Simulator 15 requires the input of one or more applications and a description of the High-Performance Computing (HPC) resources. The input include:

- The number of CPU cores available as compute resources, with the following example:

```
# register the cluster by completing the compute characteristics
cluster = Cluster (env, compute_nodes=3, # number of physical nodes
cores_per_node=2, # available cores per node
tiers=[hdd_tier, ssd_tier]) # associate storage tiers to the cluster
```

- Storage tiers with specified capacities and performance for read and write operations, for example:

```
# default max bandwidths of storage tiers are dictionaries

ssd_bandwidth = {'read': {'seq': 240, 'rand': 180}, # throughput for read in MB/s

'write': {'seq': 100, 'rand': 100}} # for read/write sequential/random I/O

# register the tier with a name and a capacity
```

```
ssd_tier = Tier (env, 'SSD', bandwidth=ssd_bandwidth, capacity=200e9)

hdd_bandwidth = {'read': {'seq': 80, 'rand': 80},

'write': {'seq': 40, 'rand': 40}}

# register the tier with a name and a capacity

hdd_tier = Tier (env, 'HDD', bandwidth=hdd_bandwidth, capacity=1e12)
```

- The presence or absence of ephemeral services, which are linked to a persistent storage tier and have the unique characteristic of not retaining data after the workflow is completed. Here is an example:

```
nvram_bandwidth = {'read': {'seq': 800, 'rand': 600},

'write': {'seq': 400, 'rand': 400}}

nvram_tier = Tier (env, 'NVRAM', bandwidth=nvram_bandwidth, capacity=10e9)

# registering Ephemeral Tier

bb = EphemeralTier (env, name="BB", persistent_tier=hdd_tier, bandwidth=nvram_bandwidth, capacity=10e9)

# Define the cluster with 1 persistent and 1 ephemeral

cluster = Cluster (env, tiers=[hdd_tier, ssb_tier], ephemeral_tier=bb)
```

This SymPi code can be used to execute a simulator 15 of the present invention to simulate an application:

```
# define a simple app read 1GB, compute for 10 time units and write a 5GB checkpoint

app = Application (env, compute=[0, 10], read=[le9, 0], write=[0, 5e9], data=data)

env.process (app.run (cluster, placement=[0, 0], # all data will be placed in HDD (tier 0)
use_bb= [False, True], # will use BB (NVRAM hardware) for the second I/O phase ))
env.run ()
```

The storage configurations simulated by the simulator 15 can be predefined and stored in a database of the high-performance computer or in a database accessible via a network. This is not the preferred embodiment, as all the possible storage configurations will be simulated, and the duration of the simulation is multiplied by the number of possible storage configurations. This permits to find a best storage configuration among a plurality of storage configuration.

In a preferred embodiment, the simulator 15 receives storage configurations to simulate from an optimization module 16 which runs an optimization heuristic to find an optimized storage configuration. In other words, the simulator 15 simulates the execution of the application with a plurality of provided storage configuration received from the optimization module 16 and provides a result for each storage configuration. The result is an overall storage performance score, preferably the total duration of the (simulated) execution of the application with the storage configuration. The optimization module uses this score to find a better storage configuration, if it exists. The optimization module 16 provides several storage configurations to the simulator 15, which in turn provides a result per storage configuration. The optimization module 16 selects, at a step 35, an optimized storage configuration for the application and adds its description to the workflow description file 11, coupled to the application. This way, when the application is executed later by the high-performance computer, the high-performance computer uses the optimized storage configuration for the execution of the application.

The optimization module 16 is preferably a black-box optimization module, such as the one described in [Sophie Robert. auto-tuning of computer systems using black-box optimization: an application to the case of i/o accelerators. Artificial Intelligence [cs.AI]. https://github.com/bds-ailab/shaman/tree/next/shaman project/bbo, Université Paris-Saclay, 2021. English. (NNT : 2021UPASG083). (tel-03507465).] or in EP3982271A1 "METHOD FOR AUTOTUNING NOISY HPC SYSTEMS". Alternatively, the optimization module 16 can use any optimization heuristic or any black-box optimization algorithm to find an optimized storage configuration.

A strong advantage of black-box optimization is its dual optimisation strategy. During optimisation, a portion of iterations are dedicated to random exploration of placement, while the rest focus on deductively exploring local minima of fitness based on results from previous iterations. This hybrid technique offers a balanced approach to finding optimal solutions. Black-box optimization can be used to find an optimal Burst Buffer size. This approach leads to more efficient optimization where only a small part of the combinations are explored to find a good optimum.

The Figure 12 shows the results of experiments testing different placement combinations for a 7-storage phases application. Each point in the graph represents a possible combination, with the required size for the Burst Buffer on the x-axis and the execution time of the workflow on the y-axis. It is observed that for the same Burst Buffer size, there are multiple placement combinations, each with a different workflow duration.

This highlights the existence of suboptimal placement solutions. The lower boundary of the points represents the efficient frontier or the Pareto frontier, which is the optimal found solution where the lowest point of each set of points vertically aligned represents the placement with the smallest workflow duration for a given Burst Buffer size.

The following solution was selected from the Pareto frontier and represents the optimal placement combination with the lowest workflow duration:

*Displaying result for placement parameter = [1 0 1 1 1 1 0 0 0 0 1 1 1]*

*| app#1 : tier placement: [1 0] | use_bb = [False, False]*

*| app#2 : tier placement: [1 1 1] | use_bb = [False, True, True]*

*| app#3 : tier placement: [1 1] | use_bb = [True, True]*

*| runtime = 177.11271737970768 | BB_size = 26.0 GB*

The SSD storage mediums are represented as "1" in the first array, and if access to the Burst Buffer is provided, the "use_bb" parameter is set to "True". The arrays of each application comprise a number of points equal to the number of storage phases of the application.

The optimal solution, selected from the Pareto frontier, utilizes a lower-tier storage service with reduced performance to ease the workload on higher-performance storage tiers. Additionally, this solution makes efficient use of the Burst Buffer, as only four out of the seven storage phases use the Burst Buffer, reducing the required Burst Buffer size from 35GB to 26GB. As a result, the workflow duration is improved, with a time of 178 seconds compared to 194 seconds for the trivial solution.

**Claims**

1. Method (3) implemented by computer for selecting a storage configuration based on a plurality of storage mediums (141), the plurality of storage mediums (141) being comprised in a high-performance computer, HPC, the storage configuration defining at least one storage medium of the plurality of storage mediums (141) to use during the execution of at least one application to be executed by the high-performance computer, the method (3) comprising:

    - Obtaining (31) configuration data of the high-performance computer, the configuration data comprising a list of the plurality of storage mediums (141) and input/output data of the application to be executed by the high-performance computer captured during a previous execution of the application by the HPC, the input/output data comprising at least bandwidth, latency, amount of data read from storage, amount of data written into storage,
    - decomposing (32) the obtained input/output data into storage phases and computational phases by classifying each data point of the obtained input/output data in a class corresponding to a computing phase of the application or in a class corresponding to a storage phase of the application, the classification being performed using a clustering model, to obtain an application representation, the application representation being a vector of time units comprising the volume of data of each storage phase and a null value for each compute phase, each storage phase comprising phase characteristics comprising read and write patterns, number of operations and bandwidth,
    - obtaining (33) expected storage performances, the obtaining (33) comprising providing the storage phase characteristics of each storage phase to a trained performance regression model (14), the expected storage performances comprising, for each storage phase, storage performance of each storage medium of the plurality of storage mediums (141) storing said storage phase,
    - simulating (34) the execution of the first application for each storage configuration of a plurality of storage configurations based on the plurality of storage mediums (141), wherein the plurality of storage configurations is provided by an optimization module (16) to a simulating module (15) performing the simulating (34), the simulating (34) comprising providing the application representation to a simulation model and obtaining a performance score of each storage configuration of the plurality of storage configurations by simulating, for each storage configuration, storing an amount of data corresponding to an amount of data of each storage phase resulting from the decomposing of the input/output data,

- selecting (35), from the plurality of storage configurations, the storage configuration having a highest performance score and using the selected storage configuration as the storage configuration for the execution of the application by the high-performance computer.

2. Method (3) according to claim 1 wherein the clustering model is a k-means clustering model and wherein the classification comprises:

- obtaining a predetermined threshold,
- initializing (323) a counter,
- with N the number of data points of the input/output data, while (324) the counter has not reached N or a weight is inferior to the predetermined threshold:

  ○ incrementing (3241) the counter,
  ○ clustering (3242) the input/output data using the k-means clustering model with the counter as the number of clusters as an entry parameter of the k-means clustering model, to obtain a plurality of clusters,
  ○ finding (3243) the lowest cluster from the plurality of clusters,
  ○ computing (3244) the weight, the weight being the number of data points belonging to the lowest cluster found divided by the sum of all values of all the data points of the input/output data,

- creating (325,326), for each data point of the input/output data, a label representing the class corresponding to a computing phase of the application or the class corresponding to a storage phase of the application, as a function of the clustering of the data point of the input/output data in a cluster of the plurality of clusters.

3. Method (3) according to the preceding claim wherein the input/output data comprise at least a first timeseries and a second timeseries captured during a same first time interval when the high-performance computer executes the application,

- the first timeseries comprising an amount of data written, by the executed application, within the high-performance computer and
- the second timeseries comprising an amount of data read, by the executed application, within the high-performance computer,

and wherein decomposing (32) the obtained input/output data into storage phases and computational phases first comprises combining (321) the first timeseries with the second timeseries into a combined timeseries comprising the amount of data written and read, by the executed application, within the high-performance computer during the time interval.

4. Method (3) according to any of the preceding claims wherein the trained performance regression model (14) is a random forest regressor model, a gradient boosting regressor model or a decision tree regressor model.

5. Method (3) according to any of the preceding claims wherein the trained performance model (14) has been previously trained using input/output data captured during the execution of a plurality of applications by the high-performance computer.

6. Method (3) according to the preceding claim wherein the optimization module (16) is a black-box optimization engine.

7. System (1) configured to implement the method according to any one of the preceding claims and comprising:

- at least one memory storing the configuration data (11),
- a decomposer module (13) configured to perform the decomposing,
- a performance module (14) configured to obtain expected storage performance,
- a simulating module (15) configured to perform the simulating.

8. A computer program product comprising instructions which, when the program is executed by a computer, cause the computer to carry out the method (3) according to any of claims 1 to 6.

9. A computer-readable medium having stored thereon the computer program product of claim 8.

**Patentansprüche**

1. Verfahren (3), das durch einen Computer implementiert wird, zum Auswählen einer Speicherkonfiguration basierend auf einer Vielzahl von Speichermedien (141), wobei die Vielzahl von Speichermedien (141) in einem Hochleistungscomputer, HPC, umfasst ist, wobei die Speicherkonfiguration mindestens ein Speichermedium der Vielzahl von Speichermedien (141) definiert, um während der Ausführung mindestens einer Anwendung verwenden zu werden, die durch den Hochleistungscomputer auszuführen ist, das Verfahren (3) umfassend:

   - Erhalten (31) von Konfigurationsdaten des Hochleistungscomputers, die Konfigurationsdaten umfassend eine Liste der Vielzahl von Speichermedien (141) und Eingabe-/Ausgabedaten der Anwendung, die durch den Hochleistungscomputer auszuführen ist, die während einer vorherigen Ausführung der Anwendung durch den HPC erfasst wurden, die Eingabe-/Ausgabedaten umfassend mindestens Bandbreite, Latenz, Menge von Daten, die aus dem Speicher gelesen werden, Menge von Daten, die in den Speicher geschrieben werden,
   - Zerlegen (32) der erhaltenen Eingabe-/Ausgabedaten in Speicherphasen und Rechenphasen durch ein Klassifizieren jedes Datenpunkts der erhaltenen Eingabe-/Ausgabedaten in eine Klasse, die einer Rechenphase der Anwendung entspricht, oder in eine Klasse, die einer Speicherphase der Anwendung entspricht, wobei die Klassifizierung unter Verwendung eines Clustering-Modells durchgeführt wird, um eine Anwendungsdarstellung zu erhalten, wobei die Anwendungsdarstellung ein Vektor von Zeiteinheiten ist, umfassend das Volumen von Daten jeder Speicherphase und einen Nullwert für jede Rechenphase, jede Speicherphase umfassend Phaseneigenschaften, umfassend Lese- und Schreibmuster, Anzahl von Operationen und Bandbreite,
   - Erhalten (33) erwarteter Speicherleistungen, das Erhalten (33) umfassend ein Bereitstellen der Speicherphaseneigenschaften jeder Speicherphase an ein trainiertes Leistungsregressionsmodell (14), die erwarteten Speicherleistungen umfassend, für jede Speicherphase, Speicherleistung jedes Speichermediums der Vielzahl von Speichermedien (141), die die Speicherphase speichern,
   - Simulieren (34) der Ausführung der ersten Anwendung für jede Speicherkonfiguration einer Vielzahl von Speicherkonfigurationen basierend auf der Vielzahl von Speichermedien (141), wobei die Vielzahl von Speicherkonfigurationen durch ein Optimierungsmodul (16) an ein Simulationsmodul (15) bereitgestellt wird, das das Simulieren (34) durchführt, das Simulieren (34) umfassend das Bereitstellen der Anwendungsdarstellung an ein Simulationsmodell und das Erhalten einer Leistungsbewertung jeder Speicherkonfiguration der Vielzahl von Speicherkonfigurationen durch das Simulieren, für jede Speicherkonfiguration, des Speicherns einer Menge von Daten entsprechend einer Menge von Daten jeder Speicherphase, die aus dem Zerlegen der Eingabe-/Ausgabedaten resultiert,
   - Auswählen (35), aus der Vielzahl von Speicherkonfigurationen, der Speicherkonfiguration, die eine höchste Leistungsbewertung aufweist, und Verwenden der ausgewählten Speicherkonfiguration als die Speicherkonfiguration für die Ausführung der Anwendung durch den Hochleistungscomputer.

2. Verfahren (3) nach Anspruch 1, wobei das Clustering-Modell ein k-Means-Clustering-Modell ist und wobei die Klassifikation umfasst:

   - Erhalten einer zuvor bestimmten Schwelle,
   - Initialisieren (323) eines Zählers,
   - wobei N die Anzahl von Datenpunkten der Eingabe-/Ausgabedaten ist, während (324) der Zähler N nicht erreicht hat oder ein Gewicht unter der zuvor bestimmten Schwelle liegt:

     o Inkrementieren (3241) des Zählers,
     o Clustern (3242) der Eingabe-/Ausgabedaten unter Verwendung des k-Means-Clustering-Modells mit dem Zähler als die Anzahl der Cluster als ein Eingabeparameter des k-Means-Clustering-Modells, um eine Vielzahl von Clustern zu erhalten,
     o Ermitteln (3243) des niedrigsten Clusters aus der Vielzahl von Clustern,
     o Berechnen (3244) des Gewichts, wobei das Gewicht die Anzahl von Datenpunkten, die zu dem gefundenen niedrigsten Cluster gehören, geteilt durch die Summe aller Werte aller der Datenpunkte der Eingabe-/Ausgabedaten ist,

- Erstellen (325, 326), für jeden Datenpunkt der Eingabe-/Ausgabedaten, einer Kennzeichnung, die die Klasse entsprechend einer Rechenphase der Anwendung oder die Klasse entsprechend einer Speicherphase der Anwendung darstellt, in Abhängigkeit von dem Clustering des Datenpunkts der Eingabe-/Ausgabedaten in einem Cluster der Vielzahl von Clustern.

3. Verfahren (3) nach dem vorstehenden Anspruch, wobei die Eingabe-/Ausgabedaten mindestens eine erste Zeitreihe und eine zweite Zeitreihe umfassen, die während eines gleichen ersten Zeitintervalls erfasst werden, wenn der Hochleistungscomputer die Anwendung ausführt,

- wobei die erste Zeitreihe eine Menge von Daten umfasst, die durch die ausgeführte Anwendung innerhalb des Hochleistungscomputers geschrieben werden und
- wobei die zweite Zeitreihe eine Menge von Daten umfasst, die durch die ausgeführte Anwendung innerhalb des Hochleistungscomputers gelesen werden,

und wobei das Zerlegen (32) der erhaltenen Eingabe-/Ausgabedaten in Speicherphasen und Berechnungsphasen zunächst ein Kombinieren (321) der ersten Zeitreihe mit der zweiten Zeitreihe zu einer kombinierten Zeitreihe umfasst, umfassend die Menge von Daten, die durch die ausgeführte Anwendung innerhalb des Hochleistungscomputers während des Zeitintervalls geschrieben und gelesen werden.

4. Verfahren (3) nach einem der vorstehenden Ansprüche, wobei das trainierte Leistungsregressionsmodell (14) ein Random-Forest-Regressormodell, ein Gradient-Boosting-Regressormodell oder ein Entscheidungsbaum-Regressormodell ist.

5. Verfahren (3) nach einem der vorstehenden Ansprüche, wobei das trainierte Leistungsmodell (14) zuvor unter Verwendung von Eingabe-/Ausgabedaten trainiert wurde, die während der Ausführung einer Vielzahl von Anwendungen durch den Hochleistungscomputer erfasst werden.

6. Verfahren (3) nach dem vorstehenden Anspruch, wobei das Optimierungsmodul (16) eine Black-Box-Optimierungsmaschine ist.

7. System (1), das konfiguriert ist, um das Verfahren nach einem der vorstehenden Ansprüche zu implementieren und umfassend:

- mindestens einen Speicher, der die Konfigurationsdaten (11) speichert,
- ein Zerlegungsmodul (13), das konfiguriert ist, um das Zerlegen durchzuführen,
- ein Leistungsmodul (14), das konfiguriert ist, um erwartete Speicherleistung zu erhalten,
- ein Simulationsmodul (15), das konfiguriert ist, um die Simulation durchzuführen.

8. Computerprogrammprodukt, umfassend Anweisungen, die, wenn das Programm durch einen Computer ausgeführt wird, den Computer veranlassen, das Verfahren (3) nach einem der Ansprüche 1 bis 6 vorzunehmen.

9. Computerlesbares Medium, auf dem das Computerprogrammprodukt nach Anspruch 8 gespeichert ist.

**Revendications**

1. Procédé (3) mis en œuvre par ordinateur de sélectionn de configuration de stockage à partir d'une pluralité de supports de stockage (141), la pluralité de supports de stockage (141) étant comprise dans un calculateur à haute performance, HPC, la configuration de stockage définissant au moins un support de stockage de la pluralité de supports de stockage (141) à utiliser pendant l'exécution d'au moins une application à exécuter par le calculateur à haute performance, le procédé (3) comprenant :

- obtenir (31) des données de configuration du calculateur à haute performance, les données de configuration comprenant une liste de la pluralité de supports de stockage (141) et des données entrée/sortie de l'application à exécuter par l'ordinateur à haute performance capturées lors d'une exécution précédente de l'application par le HPC, les données entrée-sortie comprenant au moins bande passante, latence, quantité de données lues à partir du stockage, quantité de données écrites dans le stockage,
- décomposer (32) les données entrée/sortie obtenues en phases de stockage et en phases de calcul en classant chaque point de données des données entrée/sortie obtenues dans une classe correspondant à une phase de calcul de l'application ou dans une classe correspondant à une phase de stockage de l'application, la classification étant effectuée à l'aide d'un modèle de regroupement, pour obtenir une représentation d'application, la représentation d'application étant un vecteur d'unités de temps comprenant le volume de données de chaque phase de stockage et une valeur nulle pour chaque phase de calcul, chaque phase de stockage comprenant des caractéristiques de phase comprenant des motifs de lecture et d'écriture, nombre d'opérations et largeur de bande,

- obtenir (33) des performances de stockage attendues, l'obtention (33) comprenant fournir des caractéristiques de phase de stockage de chaque phase de stockage à un modèle de régression de performance entraîné (14), les performances de stockage attendues comprenant, pour chaque phase de stockage, des performances de stockage de chaque support de stockage de la pluralité de supports de stockage (141) stockant ladite phase de stockage,

- simuler (34) l'exécution de la première application pour chaque configuration de stockage d'une pluralité de configurations de stockage en fonction de la pluralité de supports de stockage (141), dans lequel la pluralité de configurations de stockage est fournie par un module d'optimisation (16) à un module de simulation (15) effectuant la simulation (34), la simulation (34) comprenant la fourniture de la représentation d'application à un modèle de simulation et l'obtention d'un score de performance de chaque configuration de stockage de la pluralité de configurations de stockage en simulant, pour chaque configuration de stockage, le stockage d'une quantité de données correspondant à une quantité de données de chaque phase de stockage résultant de la décomposition des données entrée/sortie,

- sélectionner (35), parmi la pluralité de configurations de stockage, la configuration de stockage ayant un score de performance le plus élevé, et utiliser la configuration de stockage sélectionnée comme configuration de stockage pour l'exécution de l'application par le calculateur à haute performance.

2. Procédé (3) selon la revendication 1, dans lequel le modèle de regroupement est un modèle de regroupement k-moyennes, et dans lequel la classification comprend :

- obtenir un seuil prédéterminé,
- initialiser (323) un compteur,
- avec N le nombre de points de données des données entrée/sortie lorsque (324) le compteur n'a pas atteint N ou qu'un poids est inférieur au seuil prédéterminé :

  ◦ incrémenter (3241) le compteur,
  ◦ regrouper (3242) les données entrée/sortie à l'aide du modèle de regroupement k-moyennes avec le compteur en tant que nombre de groupes en tant que paramètre d'entrée du modèle de regroupement k-moyennes, afin d'obtenir une pluralité de groupes,
  ◦ rechercher (3243) le groupe le plus bas dans la pluralité de groupes,
  ◦ calculer (3244) le poids, le poids étant le nombre de points de données appartenant au groupe le plus bas trouvé divisé par la somme de toutes les valeurs de tous les points de données des données entrée-sortie,

- créer (325, 326), pour chaque point de données des données entrée/sortie, une étiquette représentant la classe correspondant à une phase de calcul de l'application ou la classe correspondant à une phase de stockage de l'application, en fonction du regroupement du point de données des données entrée-sortie dans un groupe de la pluralité de groupes.

3. Procédé (3) selon la revendication précédente, dans lequel les données entrée-sortie comprennent au moins une première série temporelle et une seconde série temporelle capturées pendant un même premier intervalle de temps lorsque le calculateur haute performance exécute l'application,

- la première série temporelle comprenant une quantité de données écrites, par l'application exécutée, dans l'ordinateur à haute performance et
- la seconde série temporelle comprenant une quantité de données lues, par l'application exécutée, dans le calculateur haute performance,

et dans lequel la décomposition (32) des données entrée-sortie obtenues en phases de stockage et phases de calcul comprend d'abord la combinaison (321) de la première série temporelle avec la seconde série temporelle en une série temporelle combinée comprenant la quantité de données écrites et lues, par l'application exécutée, dans le calculateur haute performance pendant l'intervalle de temps.

4. Procédé (3) selon l'une quelconque des revendications précédentes, dans lequel le modèle de régression de performance entraîné (14) est un modèle de régresseur de forêt aléatoire, un modèle de régresseur d'amplification de gradient ou un modèle de régresseur d'arbre de décision.

5. Procédé (3) selon l'une quelconque des revendications précédentes, dans lequel le modèle de performance entraîné (14) a été préalablement entraîné à l'aide de données entrée/sortie capturées pendant l'exécution d'une pluralité d'applications par le calculateur haute performance.

6. Procédé (3) selon la revendication précédente, dans lequel le module d'optimisation (16) est un moteur d'optimisation en boîte noire.

7. Système (1) configuré pour mettre en œuvre le procédé selon l'une quelconque des revendications précédentes et comprenant :

   - au moins une mémoire stockant les données de configuration (11),
   - un module de décomposition (13) configuré pour effectuer la décomposition,
   - un module de performance (14) configuré pour obtenir des performances de stockage attendues,
   - un module de simulation (15) configuré pour effectuer la simulation.

8. Produit programme informatique comprenant des instructions qui, lorsque le programme est exécuté par un ordinateur, amènent l'ordinateur à réaliser le procédé (3) selon l'une quelconque des revendications 1 à 6.

9. Support lisible par ordinateur, sur lequel est stocké le produit programme informatique selon la revendication 8.

**FIG. 1**

**FIG. 2**

FIG. 3

FIG. 4

32

| 321 | ⇨ | 322 | ⇨ | 323 | ⇨ | 324 | ⇨ | 325 |

**FIG. 5**

324

| 3241 | ⇨ | 3242 | ⇨ | 3243 | ⇨ | 3244 |

**FIG. 6**

**FIG. 7**

**FIG. 8**

**FIG. 9**

Fit of decision_tree_regressor_lfs_bw.joblib
$R^2$(test)=0.913 | $R^2$(train)= 0.961

**FIG. 10**

| I/O phase | read vol-ume | write volume | IOI    bw (MB/s) | NFS  bw (MB/s) | LustreFS bw (MB/s) | LustreFS + BB  bw (MB/s) |
|---|---|---|---|---|---|---|
| 0 | 0 B | 0 B | 0 | 0 | 0 | 0 |
| 1 | 1.73 GB | 0B | 346 | 110 | 2240 | 3790 |
| 8 | 1.59 GB | 2.04 GB | 362 | 104 | 843 | 2380 |
| 12 | 3.17 GB | 4.14 GB | 593 | 153 | 991 | 2200 |
| 44 | 3 MB | 5.33 GB | 267 | 101 | 743 | 1330 |
| 50 | 7 MB | 5.31 GB | 266 | 107 | 953 | 1330 |
| 54 | 2.5 MB | 5.33 GB | 214 | 109 | 983 | 1340 |
| 56 | 0 B | 0 B | 0 | 0 | 0 | 0 |

# FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2023016170 A1

- EP 3982271 A1

### Non-patent literature cited in the description

- **JIN, TONG et al.** Exploring data staging across deep memory hierarchies for coupled data intensive simulation workflows.. *2015 IEEE International Parallel and Distributed Processing Symposium*
- CRESCO ENEA HPC clusters: A working example of a multifabric GPFS Spectrum Scale layout.. **LANNONE, F. et al.** 2019 International Conference on High Performance Computing & Simulation (HPCS). IEEE, 2019

- auto-tuning of computer systems using black-box optimization: an application to the case of i/o accelerators. **SOPHIE ROBERT**. Artificial Intelligence. Université Paris-Saclay, 2021